# EUROPÄISCHE PATENTSCHRIFT

(11) **EP 2 310 812 B1**
(45) Veröffentlichungstag und Bekanntmachung des Hinweises auf die Patenterteilung: **16.09.2020**
(21) Anmeldenummer: 09781090.7
(22) Anmeldetag: 27.07.2009
(51) Int. Cl.: G01F 1/84

(54) **MESSAUFNEHMER VOM VIBRATIONSTYP**
VIBRATION-TYPE MEASURING SENSOR
CAPTEUR DE MESURE DU TYPE À VIBRATIONS

(30) Priorität: 14.08.2008 DE 102008037700
(43) Veröffentlichungstag der Anmeldung: 20.04.2011
(73) Patentinhaber: Endress + Hauser Flowtec AG, 4153 Reinach (CH)
(72) Erfinder: ANKLIN-IMHOF, Martin, CH-4143 Dornach (CH); BITTO, Ennio, CH-4147 Aesch (CH); ECKERT, Gerhard, 79639 Grenzach-Uhlen (DE); MUNDSCHIN, Dieter, CH-4410 Liestal (CH)
(74) Vertreter: Andres, Angelika Maria
(86) Internationale Anmeldenummer: PCT/EP2009/059625
(87) Internationale Veröffentlichungsnummer: WO 2010/018054

(56) Entgegenhaltungen:
- EP-A- 0 518 124
- EP-A- 1 001 254
- US-A- 4 957 005

## Beschreibung

Die Erfindung betrifft einen Messaufnehmer vom Vibrationstyp, zur Erfassung wenigstens einer Messgröße eines durch eine Rohrleitung strömenden Mediums auf der Grundlage des Coriolis-Prinzips, mit einem Messrohr, das über einen Einlass und über einen Auslass mit der Rohrleitung verbindbar ist, wobei das Messrohr einen ersten Messrohrbogen und einen zweiten Messrohrbogen aufweist, mit einem Schwingungserreger zur Erregung von Schwingungen der Messrohrbögen, mit wenigstens einem Schwingungssensor zur Erfassung der resultierenden Schwingungen der Messrohrbögen, und mit einem die Messrohrbögen umschließenden Aufnehmergehäuse.

Ein derartiger Messaufnehmer ist aus der US 2001/0029790 A1 bekannt. Der dort beschriebene Coriolis-Messaufnehmer sowie andere Messaufnehmer mit zwei Messrohrbögen haben den Vorteil, dass im Betrieb, also wenn die Messrohrbögen schwingen, der Masseschwerpunkt des gesamten Messrohrs im Wesentlichen konstant gehalten werden kann. Dies ist insbesondere dadurch realisierbar, dass die beiden Messrohrbögen zu gegenphasigen Schwingungen angeregt werden. Damit erhält man insgesamt ein Schwingungssystem, das sich nach außen, also z.B. gegenüber dem Rohrleitungssystem, in das es eingebaut ist, im Wesentlichen neutral verhält. Schwingungsübertragungen von dem Messaufnehmer auf das Rohrleitungssystem und insbesondere damit verbundene unkontrollierte Rücckopplungen, die die Erfassung der Messgröße des durch die Rohrleitung strömenden Mediums verfälschen würden, können somit stark reduziert werden.

Bei Messaufnehmern der in Rede stehenden Art erfolgt der Einbau in eine Rohrleitung über den Einlass und den Auslass des Messaufnehmers. Der Einlass und der Auslass des Messaufnehmers sind dabei typischerweise starr mit dem Aufnehmergehäuse des Messaufnehmers verbunden, das die Messrohrbögen umfasst. Um nun zu vermeiden, dass die gesamte Einheit aus Messrohr mit den beiden Messrohrbögen sowie Schwingungserreger und Schwingungssensor lediglich an den beiden Stellen am Aufnehmergehäuse aufgehängt ist, wo das Messrohr einlaufseitig bzw. auslaufseitig starr an einer Wandung des Aufnehmergehäuses befestigt ist, ist gemäß der US 2001/0029790 folgende Konstruktion vorgesehen: Ein sogenannter Anker ist starr an dem Aufnehmergehäuse befestigt, wobei die beiden Messrohrbögen jeweils in einem Anfangsbereich und einem Endbereich in diesen Anker starr eingespannt sind. Auf diese Weise wird ein stabiles System erzielt, da Schwingungen der gesamten Konstruktion aus den beiden Messvorbögen, dem Schwingungserreger und dem Schwingungssensors innerhalb des Aufnehmergehäuses zwischen der starren Verbindung des Einlasses bzw. des Auslasses an einer Wandung des Aufnehmergehäuses, z. B. aufgrund von außen einkoppelnden Schwingungen oder Kräften, vermieden werden.
Das Patent US 4,957,005 offenbart einen Messaufnehmer vom Vibrationstyp mit einem einzigen, helikal in vier Windungen geführten Messrohr von denen die beiden inneren Windungen mit einem starren Verbindungselement zu einem Oszillator verbunden sind. Dieser Oszillator wird von den beiden äußeren der Windungen, die jeweils mit ihrem äußeren Ende an einem Tragrahmen befestigt sind, elastisch gehalten.
Bei den bekannten Messaufnehmern vom Vibrationstyp, von dem die Erfindung ausgeht, ist die Störanfälligkeit gegenüber von außen einkoppelnden Schwingungen jedoch noch nicht befriedigend.
Daher ist es die Aufgabe der Erfindung, einen derartigen Messaufnehmer vom Vibrationstyp bereitzustellen, der bei kleinem und kostenmäßig günstigem Design messtechnisch robust und zuverlässig ist.
Ausgehend von dem eingangs beschriebenen Messaufnehmer ist diese Aufgabe dadurch gelöst, durch den Messaufnehmer nach dem unabhängigen Patentanspruch 1.
Die Erfindung offenbart also einen Messaufnehmer vom Vibrationstyp, zur Erfassung wenigstens einer Messgröße eines durch eine Rohrleitung strömenden Mediums auf der Grundlage des Coriolis-Prinzips, mit einem Messrohr, das über einen Einlass und über einen Aus-lass mit der Rohrleitung verbindbar ist, wobei das Messrohr einen ersten Messrohrbogen und einen zweiten Messrohrbogen aufweist,
mit einem Schwingungserreger zur Erregung von Schwingungen der Messrohrbögen, mit wenigstens einem Schwingungssensor zur Erfassung der resultierenden Schwingungen der Messrohrbögen, und
mit einem die Messrohrbögen umschließenden Aufnehmergehäuse,
wobei die Messrohrbögen elastisch an das Aufnehmergehäuse angekoppelt sind,
wobei ein die beiden Messrohrbögen starr miteinander verbindendes starres Verbindungselement vorgesehen ist, das elastisch an das Aufnehmergehäuse angekoppelt ist,
wobei erfindungsgemäß
zur elastischen Ankopplung der Messrohrbögen an das Aufnehmergehäuse ein mit dem die beiden Messrohrbögen starr miteinander verbindenden starren Verbindungselement elastisch gekoppelter Tragrahmen vorgesehen ist,
zwischen dem Tragrahmen und dem starren Verbindungselement ein elastisches Dämpfungselement vorgesehen ist, welches nicht nur elastisch, sondern auch dämpfend wirkt, also der Übertragung von Schwingungen zusätzlich entgegenwirkt, und
an dem starren Verbindungselement eine Hülse starr befestigt ist, das elastische Dämpfungselement durch die Hülse hindurchgeführt ist, der Tragrahmen eine Mehrzahl von Füßen, mit denen er an dem Aufnehmergehäuse starr befestigt ist, und das Dämpfungselement zwischen der Hülse und dem Tragrahmen eingespannt ist.

Eine derartige elastische und dämpfende Ankopplung der Messrohrbögen an das Aufnehmergehäuse ist insofern vorteilhaft, als dass damit Schwingungsankopplungen von außen in das Messrohr weiter verringert werden können.

Erfindungsgemäß ist vorgesehen, dass ein die beiden Messrohrbögen starr miteinander verbindendes starres Verbindungselement elastisch an das Aufnehmergehäuse angekoppelt ist. Dies bedeutet, dass die Messrohrbögen jeweils jedenfalls an einer Stelle starr miteinander verbunden sind, nämlich mittels des starren Verbindungselementes, das seinerseits eine elastische Ankoppelung an das Aufnehmergehäuse aufweist.

Die Ausgestaltung der Messrohrbögen, insbesondere deren Anordnung zueinander im Raum, kann verschiedenen Konstruktionen folgen. Gemäß einer bevorzugten Weiterbildung der Erfindung ist jedoch vorgesehen, dass die Messrohrbögen wenigstens bereichsweise in zueinander parallel verlaufenden Ebenen angeordnet sind. Im Ergebnis erzielt man damit eine Doppelbogenkonstruktion mit zwei zum Großteil in zueinander planparallelen Ebenen verlaufenden Messrohrbögen. Durch diese Parallelität der Messrohrbögen, die wenigstens abschnittsweise, ganz besonders bevorzugt längs des größten Teils der Rohrbögen vorgesehen ist, kann auf besonders effiziente Art und Weise, die weiter oben schon angesprochene Schwingungsneutralität aufgrund eines im Wesentlichen ruhenden Masseschwerpunkts des Messaufnehmers im Betrieb erzielt werden.

Gemäß einer bevorzugten Weiterbildung der Erfindung ist ferner vorgesehen, dass der erste Messrohrbogen einen Einlassbogenbereich aufweist und der zweite Messrohrbogen einen Auslassbogenbereich aufweist, wobei der Einlassbogenbereich und der Auslassbogenbereich jeweils außerhalb der zueinander parallel verlaufenden Ebenen vorgesehen sind und zum Einlass bzw. zum Auslass hinführen und wobei das die beiden Messrohrbögen starr miteinander verbindende starre Verbindungselement an dem Einlassbogenbereich und an dem Auslassbogenbereich starr befestigt ist. Im Ergebnis kann damit eine derartige Konstruktion erzielt werden, bei der die beiden Messrohrbögen in ihrem größten Bereich planparallel zueinander verlaufen, wobei lediglich in dem Einlassbogenbereich, also in dem Bereich, der vom Einlass zum ersten Messrohrbogen hinführt, und in dem Auslassbogenbereich, also in dem Bereich, der vom zweiten Messrohrbogen zum Auslass führt, die jeweiligen Abschnitte des Messrohrs außerhalb der planparallelen Ebenen liegen. Genau in diesen Abschnitten, die außerhalb der planparallelen Ebenen liegen, ist die starre Fixierung mit dem Verbindungselement vorgesehen.

Bei der zuvor beschriebenen bevorzugten Weiterbildung der Erfindung ist vorzugsweise ferner zwischen dem ersten Messrohrbogen und dem zweiten Messrohrbogen ein den ersten Messrohrbogen mit den zweiten Messrohrbogen verbindender Verbindungsbogenbereich vorgesehen, der außerhalb der zueinander parallel verlaufenden Ebenen verläuft, wobei das die beiden Messrohrbögen starr miteinander verbindende starre Verbindungselement zusätzlich an dem Verbindungsbogenbereich starr befestigt ist. Dies bedeutet also, dass das Messrohr an drei Stellen an dem Verbindungselement fixiert ist, nämlich am Einlassbogenbereich, am Auslassbogenbereich und am Verbindungsbogenbereich zwischen den beiden Messrohrbögen, wobei alle diese Bereiche jeweils solche Messrohrabschnitte betreffen, die außerhalb der planparallelen Ebenen der größten Abschnitte der Messrohrbögen liegen.

Erfindungsgemäß ist vorgesehen, dass zur elastischen Ankoppelung der Messrohrbögen an das Aufnehmergehäuse ein mit dem die beiden Messrohrbögen starr miteinander verbindenden starren Verbindungselement elastisch gekoppelter Tragrahmen vorgesehen ist. Gemäß einer bevorzugten Weiterbildung der Erfindung ist also sowohl auf der Seite des Messrohrs, nämlich in Form des Verbindungselements, als auch auf der Seite des Aufnehmergehäuses, nämlich in Form des Tragrahmens, ein starres Element vorgesehen, wobei die elastische Kopplung zwischen diesen beiden starren Elementen erfolgt. Gemäß einer bevorzugten Weiterbildung der Erfindung ist insofern zwischen den Tragrahmen und dem starren Verbindungselement ein elastisches Dämpfungselement vorgesehen. Damit wird für die elastische Ankopplung des Messrohrs an das Aufnehmergehäuse ein derartiges Element verwendet, das nicht nur elastisch, sondern auch dämpfend wirkt, also der Übertragung von Schwingungen zusätzlich entgegenwirkt.

Hinsichtlich des Dämpfungselements und dessen Ausgestaltung und Befestigung ist Erfindungsgemäß vorgesehen, dass an dem starren Verbindungselement eine Hülse starr befestigt ist, das elastische Dämpfungselement durch die Hülse hindurchgeführt ist, der Tragrahmen eine Mehrzahl von Füßen aufweist, mit denen er an dem Aufnehmergehäuse starr befestigt ist, und das Dämpfungselement zwischen der. Hülse und dem Trägerelement eingespannt ist. Dies ist eine Konstruktion, die sich für einen Messaufnehmer vom Vibrationstyp, der nach dem Coriolis-Prinzip arbeitet, besonders bewährt hat.

Gemäß einer bevorzugten Weiterbildung der Erfindung ist insbesondere vorgesehen, dass das elastische Dämpfungselement unter Vorspannung steht. Bei der zuvor beschriebenen Konstruktion ist insofern gemäß einer bevorzugten Weiterbildung der Erfindung vorgesehen, dass das Trägerelement eine Vorspanneinrichtung zur Vorspannung des Dämpfungselements aufweist.

Gemäß einer bevorzugten Weiterbildung der Erfindung ist ferner vorgesehen, dass der Einlass und der Auslass starr mit dem Aufnehmergehäuse verbunden sind. Insbesondere ist insofern bevorzugt, dass der Einlass und der Auslass jeweils durch eine Wandung des Aufnehmergehäuses hindurchgeführt sind, Schließlich ist gemäß einer bevorzugten Weiterbildung der Erfindung
diesbezüglich vorgesehen, dass die Messrohrbögen elastisch an eine solche Wandung des Aufnehmergehäuses angekoppelt sind, die von den Wandungen, durch die der Einlass und der Auslass jeweils hindurchgeführt sind, verschieden ist.
Weiterhin sind gemäß einer bevorzugten Weiterbildung der Erfindung der Schwingungserreger und/oder der Schwingungssensor, vorzugsweise zwei Schwingungssensoren, derart angeordnet, dass sie zwischen den beiden Messrohrbögen wirken. In diesem Zusammenhang ist insbesondere vorgesehen, dass mit dem Schwingungserreger gegenphasige Schwingungen der Messrohrbögen anregbar sind.
Die Erfindung wird nachfolgend anhand der Zeichnung näher erläutert. In der Zeichnung zeigt
Fig. 1 den Messaufnehmer in einer Seitenansicht,
Fig. 2 den Messaufnehmer in Draufsicht, und
Fig. 3 die Ausgestaltung der elastischen Ankopplung der Messrohrbögen an das Aufnehmergehäuse gemäß der Erfindung.

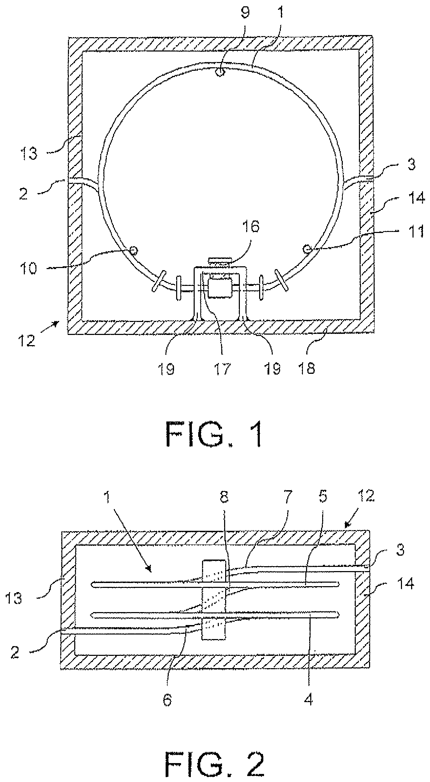

Aus Fig. 1 ist in einer Seitenansicht ein Messaufnehmer vom Vibrationstyp ersichtlich. Dieser Messaufnehmer ist zur Erfassung wenigstens einer Messgröße, wie dem Massedurchfluss, eines durch eine Rohrleitung strömenden Mediums auf der Grundlage des Coriolis-Prinzips vorgesehen. Der Messaufnehmer weist ein Messrohr 1 auf, das über einen Einlass 2 und über einen Auslass 3 mit einer nicht weiter dargestellten Rohrleitung verbindbar ist. Ferner weist das Messrohr 1 einen ersten Messrohrbogen 4 und einen zweiten Messrohrbogen 5 auf, wie insbesondere aus Fig. 2 ersichtlich. Fig. 2 ist auch entnehmbar, dass der erste Messrohrbogen 4 und der zweite Messrohrbogen 5 mit ihren wesentlichen Abschnitten in zueinander planparallelen Ebenen liegen. Nicht in einer dieser beiden Ebenen liegen ein Einlassbogenbereich 6 des Messrohrs 1, der vom Einlass 2 zum ersten Messrohrbogen 4 führt, ein Auslassbogenbereich 7, der vom zweiten Messrohrbogen 5 zum Auslass 3 führt, und ein Verbindungsbogenbereich 8, der den ersten Messrohrbogen 4 mit dem zweiten Messrohrbogen 5 verbindet.

Weiterhin ist ein Schwingungserreger 9 vorgesehen, der zwischen den beiden Messrohrbögen 4, 5 wirkt, und mit dem die beiden Messrohrbögen 4, 5 zu gegenphasigen Schwingungen anregbar sind. Zur Erfassung der resultierenden Schwingungen sind zwei Schwingungssensoren 10, 11 vorgesehen, die ebenfalls zwischen den beiden Messrohrbögen 4,5 angeordnet sind. Mit Hilfe dieser beiden Schwingungssensoren 10, 11 kann auf der Grundlage von Coriolis-Kräften herrührenden Phasenunterschieden der erfassten Schwingungen zwischen den verschiedenen Anbringungsorten der Schwingungssensoren 10, 11 in bekannter Weise auf z. B. den Massedurchfluss rückgeschlossen werden.

Die gesamte Konstruktion aus dem Messrohr 1 mit den Messrohrbögen 4, 5 und den dazwischen angeordneten Schwingungssensoren 10, 11 und dem Schwingungserreger 9 wird von einem Aufnehmergehäuse 12 umschlossen. In einander gegenüberliegenden Wandungen 13, 14 des Aufnehmergehäuses 12 sind der Einlass 2 und der Auslass 3 des Messrohrs 1 fixiert, nämlich durch Verschweißen. Ferner sind der Einlass 2 und der Auslass 3 durch die jeweilige Wandung 13, 14 hindurchgeführt, um auf diese Weise einen Anschluss an das Rohrleitungssystem zu gewährleisten.

Wesentlich ist nun, dass die Messrohrbögen 4, 5 mittels eines starren Verbindungselements 15 starr miteinander verbunden sind, wobei das Verbindungselement 15 elastisch an das Aufnehmergehäuse 12 angekoppelt ist. Konkret ist dazu das Verbindungselement 15 an dem Einlassbogenbereich 6, an dem Auslassbogenbereich 7 und an dem Verbindungsbogenbereich 8 fixiert und über ein elastisches Dämpfungselement 16 mit einem Tragrahmen 17 verbunden, der seinerseits an einer Wandung 18 des Aufnahmegehäuses 12 fixiert ist, dort nämlich angeschweißt ist. Der Tragrahmen 17 weist dazu eine Mehrzahl von Füßen 19 auf, die an der Wandung 18 des Aufnehmergehäuses 12 verschweißt sind. Eine Verbindung des Tragrahmens 17 zu dem Messrohr 1 und damit zu dem schwingenden System erfolgt ausschließlich über das. Dämpfungselement 16, das seinerseits mit dem starren Verbindungselement 15 verbunden ist. Konkret steht das Dämpfungselement 16 zwischen dem Tragrahmen 17 und dem Verbindungselement 15 unter Vorspannung, um eine definierte Null-Stellung zu gewährleisten. Darüber hinaus wird auf diese Weise die Dämpfungscharakteristik des Dämpfungselernents 16 verbessert.

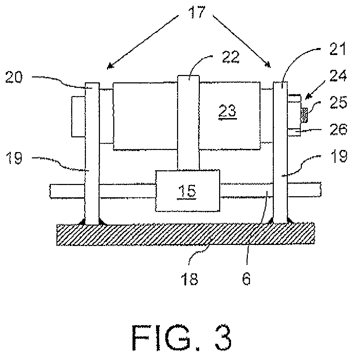

Die elastische Ankopplung des Messrohrs 1 an das Aufnehmergehäuse 12 ist, wie in Fig. 3 gezeigt, wie folgt vorgesehen: Der Tragrahmen 17 ist an die Wandung 18 des Aufnehmergehäuses 12 angeschweißt, wobei der Tragrahmen 17 ein erstes Tragrahmenelement 20 und ein zweites Tragrahmenelement 21 aufweist. Der Tragrahmen 17 weist ferner eine Mehrzahl von Füßen 19 auf. An den entsprechenden Abschnitten des Messrohrs 1,

vorliegend ersichtlich am Einiassbogehbereich 6, ist das Verbindungselement 15 fixiert, an das mittels eines Halteelements 22 eine Hülse 23 befestigt ist. Innerhalb dieser Hülse befindet sich das Dämpfungselement 16, das vorliegend aus einem Gummi- oder Kunststoffmaterial hergestellt ist. Das Dämpfungselement 16 liegt am Inneren der Hülse 23 an und kontaktiert ferner die Innenseite des ersten Tragrahmenelements 20 und die Innenseite des zweiten Tragrahmenelements 21. Weiterhin ist eine Vorspanneinrichtung 24 zur Vorspannung des Dämpfungselements 16 vorgesehen, die von einer durch das erste Tragrahmenelement 20 und das zweite Tragrahmenelement 21 sowie durch das Dämpfungselement 16 hindurchgeführte Schraube 25 gebildet wird, die mittels einer Mutter 26 angezogen werden kann. Auf diese Weise kann das Dämpfungselement 16 komprimiert und damit unter Vorspannung zwischen dem Tragrahmen 17 und dem Verbindungselement 15 eingespannt werden. Es resultiert eine stabile und gleichzeitig gedämpfte elastische Verbindung des schwingenden Systems, nämlich des Messrohrs 1 mit dem Schwingungserreger 9 und den Schwingungssensoren 10, 11 mit dem Aufnehmergehäuse 12, was insgesamt zu einer geringen Störanfälligkeit des Messaufnehmers gegenüber von außen einwirkenden Schwingungsankopplungen führt. Damit wird ein robuster und verlässlicher Messbetrieb garantiert.

### Bezugszeichenliste

- 1: Messrohr
- 2: Einlass
- 3: Auslass
- 4: erster Messrohrbogen
- 5: zweiter Messrohrbogen
- 6: Einlassbogenbereich
- 7: Auslassbogenbereich
- 8: Verbindungsbogenbereich
- 9: Schwingungserreger
- 10: erster Schwingungssensor
- 11: zweiter Schwingungssensor
- 12: Aufnehmergehäuse
- 13: erste Wandung des Aufnehmergehäuses
- 14: zweite Wandung des Aufnehmergehäuses
- 15: Verbindungselement
- 16: Dämpfungselement
- 17: Tragrahmen..
- 18: dritte Wandung des Aufnehmergehäuses
- 19: Füße des Tragrahmens
- 20: erstes Tragrahmenelement
- 21: zweites Tragrahmenelement
- 22: Halteelement
- 23: Hülse
- 24: Vorspanneinrichtung
- 25: Schraube
- 26: Mutter

## Patentansprüche

1. Messaufnehmer vom Vibrationstyp, zur Erfassung wenigstens einer Messgröße eines durch eine Rohrleitung strömenden Mediums auf der Grundlage des Coriolis-Prinzips, mit einem Messrohr (1), das über einen Einlass (2) und über einen Aus-lass (3) mit der Rohrleitung verbindbar ist, wobei das Messrohr (1) einen ersten Messrohrbogen (4) und einen zweiten Messrohrbogen (5) aufweist,
mit einem Schwingungserreger (9) zur Erregung von Schwingungen der Messrohrbögen (4, 5), mit wenigstens einem Schwingungssensor (10, 11) zur Erfassung der resultierenden Schwingungen der Messrohrbögen (4, 5), und
mit einem die Messrohrbögen (4, 5) umschließenden Aufnehmergehäuse (12), wobei die Messrohrbögen (4, 5) elastisch an das Aufnehmergehäuse (12) angekoppelt sind,
wobei ein die beiden Messrohrbögen (4, 5) starr miteinander verbindendes starres Verbindungselement (15) vorgesehen ist, das elastisch an das Aufnehmergehäuse (12) angekoppelt ist,
**dadurch gekennzeichnet,**
**dass** zur elastischen Ankopplung der Messrohrbögen (4, 5) an das Aufnehmergehäuse (12) ein mit dem die beiden Messrohrbögen (4, 5) starr miteinander verbindenden starren Verbindungselement (15) elastisch gekoppelter Tragrahmen (17) vorgesehen ist,
**dass** zwischen dem Tragrahmen (17) und dem starren Verbindungselement (15) ein elastisches Dämpfungselement (16) vorgesehen ist, welches nicht nur elastisch sondern auch dämpfend wirkt, also der Übertragung von Schwingungen zusätzlich entgegenwirkt, und
**dass** an dem starren Verbindungselement (15) eine Hülse (23) starr befestigt ist, das elastische Dämpfungselement (16) durch die Hülse (23) hindurchgeführt ist, der Tragrahmen (17) eine Mehrzahl von Füßen (19), mit denen er an dem Aufnehmergehäuse (12) starr befestigt ist, und das Dämpfungselement (16) zwischen der Hülse (23) und dem Tragrahmen (17) eingespannt ist.

2. Messaufnehmer nach Anspruch 1, wobei eine Verbindung des Tragrahmens (17) zu dem Messrohr (1) ausschließlich über das Dämpfungselement (16), das mit dem starren Verbindungselement verbunden ist, erfolgt.

3. Messaufnehmer nach Anspruch 1, **dadurch gekennzeichnet, dass** die Messrohrbögen (4, 5) wenigstens bereichsweise in zueinander parallel verlaufenden Ebenen angeordnet sind.

4. Messaufnehmer nach Anspruch 3, **dadurch gekennzeichnet, dass** der erste Messrohrbogen (4) einen Einlassbogenbereich (6) aufweist und der zweite Messrohrbogen (5) einen Auslassbogenbereich (7) aufweist, und wobei das die beiden Messrohrbögen (4, 5) starr miteinander verbindende starre Verbindungselement (15) an dem Einlassbogenbereich (6) und an dem Auslassbogenbereich (7) starr befestigt ist.

5. Messaufnehmer nach Anspruch 4, **dadurch gekennzeichnet, dass** zwischen dem ersten Messrohrbogen (4) und dem zweiten Messrohrbogen (5) ein den ersten Messrohrbogen (4) mit dem zweiten Messrohrbogen (5) verbindender Verbindungsbogenbereich (8) vorgesehen ist, der außerhalb der zueinander parallel verlaufenden Ebenen verläuft, wobei das die beiden Messrohrbögen (4, 5) starr miteinander verbindende starre Verbindungselement (15) zusätzlich an dem Verbindungsbogenbereich (5) starr befestigt ist.

6. Messaufnehmer nach einem der Ansprüche 1 bis 5, wobei der Tragrahmen (17) an einer Wandung (18) des Aufnehmergehäuses (12) fixiert ist.

7. Messaufnehmer nach Anspruch 6, wobei der Tragrahmen (17) an das Aufnehmergehäuses (12) angeschweißt ist.

8. Messaufnehmer nach Anspruch 1 oder 7, **dadurch gekennzeichnet, dass** das elastische Dämpfungselement (16) unter Vorspannung steht.

9. Messaufnehmer nach einem der Ansprüche 1 bis 8, **dadurch gekennzeichnet, dass** eine Vorspanneinrichtung (24) zur Vorspannung des Dämpfungselements (16) vorgesehen ist.

10. Messaufnehmer nach einem der Ansprüche 1 bis 9, **dadurch gekennzeichnet, dass** der Einlass (2) und der Auslass (3) starr mit dem Aufnehmergehäuse (12) verbunden sind.

11. Messaufnehmer nach Anspruch 10, **dadurch gekennzeichnet, dass** der Einlass (2) und der Auslass (3) jeweils durch eine Wandung des Aufnehmergehäuses (12) hindurchgeführt sind.

12. Messaufnehmer nach Anspruch 11, **dadurch gekennzeichnet, dass** die Messrohrbögen (4, 5) elastisch an eine solche Wandung (18) des Aufnehmergehäuses (12) angekoppelt sind, die von den Wandungen (13, 14), durch die der Einlass (2) und der Auslass (3) jeweils hindurchgeführt sind, verschieden ist.

13. Messaufnehmer nach einem der Ansprüche 1 bis 12, **dadurch gekennzeichnet, dass** der Schwingungserreger (9) und/oder der Schwingungssensor (10, 11) zwischen den beiden Messrohrbögen (4, 5) vorgesehen sind.

14. Messaufnehmer nach Anspruch 13, **dadurch gekennzeichnet, dass** mit dem Schwingungserreger (9) gegenphasige Schwingungen der Messrohrbögen (4, 5) anregbar sind.

## Claims

1. Vibronic-type sensor, designed to measure at least one process variable of a medium flowing through a pipe on the basis of the Coriolis principle, with a measuring tube (1) which can be connected to pipe via an inlet (2) and via an outlet (3), said measuring tube (1) having a first measuring tube curve (4) and a second measuring tube curve (5),
with a vibration generator (9) designed to generate vibrations of the measuring tube curves (4, 5), with at least a vibration sensor (10, 11) designed to measure the resulting vibrations of the measuring tube curves (4, 5), and with a sensor housing (12) surrounding the measuring tube curves (4, 5), wherein the measuring tube curves (4, 5) are coupled in an elastic manner to the sensor housing (12),
wherein a rigid connection element (15) is provided that interconnects the two measuring tube curves (4, 5) in a rigid manner, said element being coupled in an elastic manner to the sensor housing (12),
**characterized in that**
for the purpose of coupling the measuring tube curves (4, 5) to the sensor housing (12) in an elastic manner, a support frame (17) is provided that is elastically coupled to the rigid connection element (15) that interconnects the two measuring tube curves (4, 5) in a rigid manner,
an elastic damping element (16) is provided between the support frame (17) and the rigid connection element (15), wherein said elastic damping element (16) not only has an elastic effect but also a damping effect, and therefore additionally acts against the transmission of vibrations, and
**in that** a sleeve (23) is secured in a rigid manner to the rigid connection element (15), the elastic damping element (16) is guided through the sleeve (23), the support frame (17) comprises multiple feet (19) with which it is secured in a rigid manner to the sensor housing (12), and the damping element (16) is clamped between the sleeve (23) and the support frame (17).

2. Sensor as claimed in Claim 1, wherein a connection of the support frame (17) to the measuring tube (1) is implemented exclusively via the damping element (16), which is connected to the rigid connection element.

3. Sensor as claimed in Claim 1, **characterized in that** the measuring tube curves (4, 5) are arranged at least in parts on planes that are parallel to one another.

4. Sensor as claimed in Claim 3, **characterized in that** the first measuring tube curve (4) has an inlet curve area (6) and the second measuring tube curve (5) has an outlet curve area (7), and wherein the rigid connection element (15) interconnecting the two measuring tube curves (4, 5) in a rigid manner is connected in a rigid manner on the inlet curve area (6) and on the outlet curve area (7).

5. Sensor as claimed in Claim 4, **characterized in that** a connecting curve area (8) is provided between the first measuring tube curve (4) and the second measuring tube curve (5), said connecting curve area connecting the first measuring tube curve (4) to the second measuring tube curve (5), and extending outside the planes running parallel to one another, wherein the rigid connection element (15) that interconnects the two measuring tube curves (4, 5) in a rigid manner is additionally fixed in a rigid manner on the connecting curve area (8).

6. Sensor as claimed in one of the Claims 1 to 5, wherein the support frame (17) is fixed on a wall (18) of the sensor housing (12).

7. Sensor as claimed in Claim 6, wherein the support frame (17) is welded to the sensor housing (12).

8. Sensor as claimed in Claim 1 or 7, **characterized in that** the elastic damping element (16) is pretensioned.

9. Sensor as claimed in one of the Claims 1 to 8, **characterized in that** a pretensioning unit (24) is provided to pretension the damping element (16).

10. Sensor as claimed in one of the Claims 1 to 9, **characterized in that** the inlet (2) and the outlet (3) are connected to the sensor housing (12) in a rigid manner.

11. Sensor as claimed in Claim 10, **characterized in that** the inlet (2) and the outlet (3) each pass through a wall of the sensor housing (12).

12. Sensor as claimed in Claim 11, **characterized in that** the measuring tube curves (4, 5) are coupled in an elastic manner to a wall (18) of the sensor housing (12), said wall being different from the walls (13, 14) through which the inlet (2) and the outlet (3) pass.

13. Sensor as claimed in one of the Claims 1 to 12, **characterized in that** the vibration generator (9) and/or the vibration sensor (10, 11) are provided between the two measuring tube curves (4, 5).

14. Sensor as claimed in Claim 13, **characterized in that** out-of-phase oscillations of the measuring tube curves (4, 5) can be excited with the vibration generator (9).

## Revendications

1. Capteur du type à vibrations, destiné à la mesure d'au moins une grandeur process d'un produit s'écoulant à travers une conduite sur la base du principe de Coriolis, avec un tube de mesure (1) pouvant être relié via une entrée (2) et via une sortie (3) avec la conduite, le tube de mesure (1) présentant un premier coude de tube de mesure (4) et un deuxième coude de tube de mesure (5),
avec un excitateur de vibrations (9) destiné à l'excitation de vibrations des coudes de tube de mesure (4, 5), avec au moins un capteur de vibration (10, 11) destiné à la mesure des vibrations résultant des coudes de tube de mesure (4, 5), et avec un boîtier de capteur (12) entourant les coudes de tube de mesure (4, 5), les coudes de tube de mesure (4, 5) étant couplés de manière élastique au boîtier de capteur (12),
un élément de liaison rigide (15) reliant entre eux de façon rigide les deux coudes de tube de mesure (4, 5) étant prévu, lequel élément est couplé de façon élastique au boîtier de capteur (12),
**caractérisé**
**en ce qu'**est prévu, pour le couplage élastique des coudes de tube de mesure (4, 5) au boîtier de capteur (12), un cadre support (17) couplé élastiquement avec l' élément de liaison rigide (15) reliant de façon rigide les deux coudes de tube de mesure (4, 5) entre eux,
**en ce qu'**est prévu, entre le cadre porteur (17) et l'élément de liaison rigide (15), un élément d'amortissement élastique (16), lequel élément agit non seulement de manière élastique, mais aussi de manière amortissante, qui agit donc également contre la transmission de vibrations, et
**en ce qu'**est fixée de manière rigide une douille (23) sur l'élément de liaison rigide (15), l'élément d'amortissement élastique (16) étant guidé à travers la douille (23), le cadre support (17) comprenant une pluralité de pieds (19), avec lesquels il est fixé de manière rigide au boîtier de capteur (12), et l'élément d'amortissement (16) étant serré entre la douille (23) et le cadre support (17).

2. Capteur selon la revendication 1, pour lequel une liaison du cadre porteur (17) avec le tube de mesure (1) est réalisée exclusivement via l'élément d'amortissement (16), qui est relié avec l'élément de liaison rigide.

3. Capteur selon la revendication 1, **caractérisé en ce que** les coudes de tube de mesure (4, 5) sont disposés au moins par zones dans des plans parallèles les uns aux autres.

4. Capteur selon la revendication 3, **caractérisé en ce que** le premier coude de tube de mesure (4) présente une zone de coude d'entrée (6) et le deuxième coude de tube de mesure (5) une zone de coude de sortie (7), et l'élément de liaison rigide (15) reliant de façon rigide entre eux les deux coudes de tube de mesure (4, 5) étant fixé de façon rigide sur la zone de coude d'entrée (6) et sur la zone de coude de sortie (7).

5. Capteur selon la revendication 4, **caractérisé en ce qu'**est prévu, entre le premier coude de tube de mesure (4) et le deuxième coude de tube de mesure (5), une zone de coude de liaison (8) reliant le premier coude de tube de mesure (4) avec le deuxième coude de tube de mesure (5), laquelle zone de liaison se situe en dehors de plans parallèles l'une par rapport à l'autre, l'élément de liaison rigide (15) reliant de façon rigide entre eux les deux coudes de tube de mesure (4, 5) étant fixé de façon rigide sur la zone de coude de liaison (8).

6. Capteur selon l'une des revendications 1 à 5, pour lequel le cadre porteur (17) est fixé sur une paroi (18) du boîtier de capteur (12).

7. Capteur selon la revendication 6, pour lequel le cadre porteur (17) est soudé au boîtier de capteur (12).

8. Capteur selon la revendication 1 ou 7, **caractérisé en ce que** l'élément d'amortissement élastique (16) est sous précontrainte.

9. Capteur selon l'une des revendications 1 à 8, **caractérisé en ce qu'**est prévu un dispositif de précontrainte (24) destiné à la précontrainte de l'élément d'amortissement (16).

10. Capteur selon l'une des revendications 1 ou 9, **caractérisé en ce que** l'entrée (2) et la sortie (3) sont reliées de façon rigide avec le boîtier de capteur (12).

11. Capteur selon la revendication 10, **caractérisé en ce que** l'entrée (2) et la sortie (3) sont guidées respectivement à travers une paroi du boîtier de capteur (12).

12. Capteur selon la revendication 11, **caractérisé en ce que** les coudes de tube de mesure (4, 5) sont couplés de manière élastique à une paroi (18) du boîtier de capteur (12), laquelle paroi est différente des parois (13, 14), à travers lesquelles l'entrée (2) et la sortie (3) sont guidées.

13. Capteur selon l'une des revendications 1 à 12, **caractérisé en ce que** l'excitateur de vibrations (9) et le capteur de vibration (10, 11) sont prévus entre les deux coudes de tube de mesure (4, 5).

14. Capteur selon la revendication 13, **caractérisé en ce que** peuvent être excitées des vibrations des coudes de tube de mesure (4, 5), qui sont en opposition de phase avec l'excitateur de vibrations (9).
